# EUROPÄISCHE PATENTSCHRIFT

(11) **EP 2 584 238 B1**
(45) Veröffentlichungstag und Bekanntmachung des Hinweises auf die Patenterteilung: **23.03.2016**
(21) Anmeldenummer: 12187493.7
(22) Anmeldetag: 05.10.2012
(51) Int. Cl.: F16L 11/15, A47L 9/24

(54) **Schlauchleitung mit elastischem Hohlprofil, insbesondere für einen Staubsauger**
Hose line with elastic hollow profile, in particular for a vacuum cleaner
Tuyau flexible avec profilé creux élastique, notamment pour un aspirateur

(30) Priorität: 10.10.2011 DE 102011084196
(43) Veröffentlichungstag der Anmeldung: 24.04.2013
(73) Patentinhaber: BSH Hausgeräte GmbH, 81739 München (DE)
(72) Erfinder: Flegler, Alexander, 97616 Bad Neustadt (DE); Hasheminia, Mahbiz, 97523 Schwanfeld (DE); Schmitt, Florian, 97702 Münnerstadt (DE)

(56) Entgegenhaltungen:
- WO-A1-2010/086819
- BE-A3- 1 005 597
- US-A1- 2004 096 616

## Beschreibung

### Gebiet der Erfindung

Die Erfindung betrifft eine Schlauchleitung mit einer in Längsrichtung gewellten, innere Wellentäler aufweisenden Wandung, insbesondere zur Verwendung als Saugschlauch an einem Staubsauger, wobei im Bereich der inneren Wellentäler zur pneumatischen und/oder hydraulischen Glättung der Schlauchleitung eine Barriere vorgesehen ist, sowie einen mit einer derartigen Schlauchleitung ausgestatteten Staubsauger.

### Hintergrund der Erfindung

Staubsauger dienen der Aufnahme von Verschmutzungen von Bodenflächen, Möbeln oder dergleichen durch einen Saugluftstrom. Hierzu wird der Saugmund einer Saugdüse auf die zu reinigende Oberfläche aufgesetzt, so dass Staub oder andere Verschmutzungen vom Saugluftstrom angesaugt werden. Der Saugluftstrom wird durch ein Sauggebläse erzeugt, welches mit einer Staubabscheideeinrichtung, beispielsweise einem Fliehkraftabscheider oder einem Staubfilterbeutel, in Strömungsverbindung steht. Die von der Saugdüse aufgenommenen Schmutzpartikel werden in der Staubabscheideeinrichtung gesammelt, während die gereinigte Luft an die Umgebung abgegeben wird. Der Saugmund einer für die Bodenreinigung geeigneten Saugdüse weist üblicherweise eine rechteckige Gestalt auf und erstreckt sich quer zur Schieberichtung. Dabei ist es wünschenswert, dass über die gesamte Breite des Saugmunds ein homogener Unterdruck anliegt, um ein gleichmäßiges Saugergebnis zu erzielen. Um die Leistung des Sauggebläses besonders wirksam nutzen zu können, ist ferner ein möglichst geringer Druckverlust zwischen Saugmund und Sauggebläse vorteilhaft.

Das Sauggebläse und die Staubabscheideeinrichtung können beispielsweise an einem Schubrohr befestigt sein, das bei normalem Betrieb unmittelbar mit der Saugdüse verbunden ist und in der Regel auch einen Teil des Strömungskanals zwischen Saugdüse und Sauggebläse ausbildet (Stielstaubsauger). Bei solchen Staubsaugern kann als gesonderter Ausstattungsteil zur Bewältigung besonderer Saugaufträge temporär und stromauf des Sauggebläses anstelle der Saugdüse ein flexibler Saugschlauch angesetzt werden, beispielsweise zum Aussagen tiefer Spalte. Nach einer anderen üblichen Bauform sind das Sauggebläse und die Staubabscheideeinrichtung im Gehäuse eines gesonderten Aggregateträgers angeordnet, der mittels eines Fahrwerks über die Bodenfläche bewegt werden kann und mit dem in die Saugdüse eingesteckten Schubrohr durch einen flexiblen Saugschlauch strömungsverbunden ist (Kanisterstaubsauger). Bei dieser Ausbildung weist der Saugschlauch in der Regel eine Länge von 1 600 mm bis 2 000 mm und einen äußeren Durchmesser von 30 mm bis 50 mm auf.

Die flexiblen Saugschläuche derartiger Staubsauger sind üblicherweise als Wellschläuche ausgeführt, die im Längsschnitt eine wellenförmige Kontur aufweisen, welche den Schläuchen in axialer Richtung sowie bei Biegung um ihre Längsachsen eine erhebliche Flexibilität verleihen kann.

Nach einem ersten üblichen Herstellverfahren werden derartige Wellschläuche aus Kunststoff dadurch gefertigt, dass zunächst mittels eines Extruders und einem entsprechenden Extrusionswerkzeug aus einer Kunststoffschmelze ein glattes Schlauchprofil geformt wird. Nachfolgend wird der noch heiße Schlauch in einen Korrugator eingeführt, der in Extrusionsrichtung bewegbare Ketten aufweist. Die Kettenglieder sind mit quer zur Extrusionsrichtung verlaufenden, wellenartigen Vertiefungen ausgestattet, in welchen die noch plastisch verformbare Kunststoffmasse des Schlauches durch Anlegen eines Überdrucks im Rohrinneren und/oder eines Unterdrucks im Bereich der Kettenglieder eingepresst wird. Nach dem Abkühlen wird diese Wellenkontur dauerhaft im Schlauch eingefroren, wodurch dieser im späteren Gebrauch seine gewünschte Biegsamkeit erhält.

Bei einem weiteren üblichen Herstellverfahren wird mittels eines Extruders und eines Extrusionswerkzeugs aus einer Kunststoffschmelze ein endloser, flacher Profilstrang ausgeformt, dessen Querschnitt einerseits eine wellenförmige Kontur und andererseits randseitig einen Verbindungsbereich aufweist. Dieser Profilstrang wird nachfolgend helixförmig zu einem Schlauch gewickelt, wobei der Verbindungsbereich am ersten Rand des Profilstrangs in einem Stoßbereich stets mit dem Verbindungsbereich am gegenüberliegenden zweiten Rand des Profilstrangs verbunden wird. Die Verbindung kann beispielsweise formschlüssig durch Verrasten, oder aber stoffschlüssig durch Verschweißen oder Verkleben erfolgen.

Grundsätzlich ist es auch möglich, den Wellschlauch aus einer Vielzahl vorgeformter, insbesondere spritzgegossener Ringelemente zusammenzusetzen, die im Längsschnitt eine wellenförmige Kontur und an ihren axialen Enden einen Verbindungsbereich aufweisen. Auch in diesem Fall kann die Verbindung beispielsweise formschlüssig durch Verrasten oder aber stoffschlüssig durch Verschweißen oder Verkleben erfolgen.

Wenn derartige Wellschläuche zur Strömungsführung von Fluiden eingesetzt werden, weisen sie grundsätzlich den Nachteil auf, dass die in ihre Innenwandung eingeformten Wellentäler Turbulenzen in der Fluidströmung erzeugen und damit einen erhöhten Druckverlust hervorrufen. Bei einem Staubsauger führt dies zu einer Verminderung des Saugluftvolumenstroms, die aus ergonomischen und ökonomischen Gründen nur bedingt durch eine Erhöhung der Gebläseleistung oder des Schlauchdurchmessers kompensiert werden kann. Da der Saugluftvolumenstrom in direktem Zusammenhang mit der gemessenen Staubaufnahme steht, wird das Saugverhalten durch diesen Druckverlust beeinträchtigt. Die Turbulenzen können ferner zu einer erhöhten Geräuschentwicklung führen. Darüber hinaus ist es möglich, dass sich in den Wellentälern Staub und andere Verschmutzungen ablagern, die mit vertretbarem Aufwand kaum mehr zu entfernen sind.

Aus der internationalen Patentanmeldung WO 2010/ 086 819 A1 ist ein flexibler Schlauch der eingangs genannten Art zur Verwendung als Saugschlauch bei Staubsaugern bekannt, durch dessen Einsatz diese Nachteile vermieden werden sollen. Dieser Saugschlauch wird in der zuvor beschriebenen Weise aus einem endlos extrudierten, schraubenförmig gewickelten Profilstrang gefertigt, wobei an dem Profilquerschnitt an einem Rand eine erste Zunge und am gegenüberliegenden Rand eine zweite Zunge vorgesehen ist, welche nach dem Aufwickeln des Profils gemeinsam eine Fluidbarriere vor dem Wellental der inneren Schlauchwandung erzeugen und dieses hydraulisch oder pneumatisch glätten sowie Staubablagerungen im Wellental entgegenwirken. Da die zusammenwirkenden Zungen nicht starr miteinander verbunden sind, sondern einander nur überlappen, wird die Flexibilität des Wellschlauchs durch diese Ausbildung nur unwesentlich beeinflusst. Die Zungen sind dabei beispielsweise zueinander derart komplementär keilförmig oder gekrümmt verlaufend ausgeformt, dass der Verschluss des Wellentals auch bei einer Biegung des Saugschlauchs im Wesentlichen aufrecht erhalten wird.

Der aus dem Stand der Technik bekannte Saugschlauch ist zwar hinsichtlich seiner hydraulischen oder pneumatischen Glätte verbessert, das Eindringen von Staub in die Wellentäler kann durch die aufeinander gleitenden Zungen bei längerem Gebrauch jedoch nicht ausgeschlossen werden.

Die europäische Patentanmeldung EP 1 407 707 A2 offenbart einen ähnlichen gewickelten Saugschlauch mit gewellter Wandung, bei welchem die Barriere aber aus nur einer an den Profilstrang auskragend angeformten, dickwandigen Zunge besteht, die nachfolgend das Wellental teilweise abdeckt. Der Schlauch versteift sich infolge Biegung bei dieser Ausbildung sprunghaft, sobald die Zunge an die gegenüberliegende Wandung des Wellentals anstößt. Ferner ist diese Ausführung hinsichtlich pneumatischer Glätte und Staubablagerung weniger günstig.

In der deutschen Gebrauchsmusterschrift DE 20 2009 009 809 U1 wird ein Schlauch zum Fördern von gasförmigen oder flüssigen Medien beschrieben, der aus einem gewellten Außenschlauch und einem inneren, glatten und an den Wellenbergen des Außenschlauchs anliegenden Innenschlauch besteht. Durch diese Ausbildung werden zwar Turbulenzen in der Fluidströmung verringert, aber auch die Flexibilität des Schlauchs beeinträchtigt. Ferner erfordert das Einbringen und Befestigen des Innenschlauches einen gesonderten Fertigungsschritt.

In der Patentanmeldung US 2004 / 0 096 616 A1 wird ferner ein aus einem helixförmigen Profilstang gewickelter, gewellter Saugschlauch offenbart, bei welchem der Profilstang einen einstückig angeformten Hohlprofilbereich mit quadratischem Querschnitt aufweist. Die Wanddicke dieses Hohlprofilbereichs entspricht der relativ großen Wanddicke des übrigen Profilstangs und ist somit relativ steif. In den Hohlprofilbereich ist ferner ein diesen im Wesentlichen ausfüllendes elektrisches Kabel eingefügt, so dass dieser in mit Bezug auf die Längsachse des Saugschlauchs axialer Richtung praktisch keine Kompressibilität aufweist. Um die Flexibilität des Saugschlauch möglichst wenig zu beeinträchtigen, füllt der steife Hohlprofilbereich daher nur ein geringen Teil des inneren Wellentals aus und bewirkt damit keine nennenswerte pneumatische Glättung des Saugschlauchs, sondern dient nur der Übertragung elektrischer Energie zwischen beiden Enden des Saugschlauchs.

Schließlich offenbart die BE 1 005 597 A3 einen gewellten Saugschlauch, wobei ein spiralförmiges flexibles Hohlprofil einteilig an einer Wand des flexiblen Schlauchs angeordnet ist, sodass Flüssigkeit durch das Hohlprofil transportiert oder elektrischen Leitungen aufgenommen werden können.

### Der Erfindung zugrundeliegende Aufgabe

Der Erfindung liegt die Aufgabe zugrunde, bei einer Schlauchleitung mit einer in Längsrichtung gewellten, innere Wellentäler aufweisenden Wandung, die im Bereich der inneren Wellentäler zur pneumatischen und/oder hydraulischen Glättung der Schlauchleitung eine Barriere aufweist, und die Barriere mindestens ein elastisch komprimierbares und/oder elastisch an den Rest der Schlauchleitung angebundenes Hohlprofil aufweist, die Barrierewirkung gegenüber dem Stand der Technik insbesondere mit Blick auf die Ablagerung von Staub und anderen Verschmutzungen weiter zu verbessern und damit einer Beeinträchtigung der Funktion insbesondere bei langem Gebrauch entgegen zu wirken. Außerdem soll eine gute hydraulische und/oder pneumatische Glättung erreicht werden. Die Schlauchleitung soll einfach und preiswert herstellbar sein. Außerdem liegt der Erfindung die Aufgabe zugrunde, einen verbesserten Staubsauger mit einem Saugschlauch bereitzustellen.

### Erfindungsgemäße Lösung

Die Bezugszeichen in sämtlichen Ansprüchen haben keine einschränkende Wirkung, sondern sollen lediglich deren Lesbarkeit verbessern.

Die Lösung der gestellten Aufgabe gelingt durch eine Schlauchleitung mit den Merkmalen des Anspruchs 1 und einen Staubsauger mit den Merkmalen des Anspruchs 8.

Zur Lösung der Aufgabe ist eine Schlauchleitung mit einer in Längsrichtung gewellten, innere Wellentäler aufweisenden Wandung und einer im Bereich der inneren Wellentäler zur pneumatischen und/oder hydraulischen Glättung der Schlauchleitung gedachten Barriere vorgesehen, bei welcher die Barriere mindestens ein die Wellentäler zumindest teilweise füllendes, elastisch komprimierbares Hohlprofil aufweist. Dabei bedeutet komprimierbar, dass die Erstreckung des Hohlprofils in wenigstens eine Richtung veränderbar ist. Die Kompression kann aber muss nicht notwendigerweise eine Verringerung der Querschnittsfläche oder des Volumens des Hohlprofils zur Folge haben. Zusätzlich oder alternativ ist das Hohlprofil elastisch an den Rest der Schlauchleitung angebunden. Hinsichtlich des Staubsaugers erfolgt die Lösung durch Verwendung einer derartigen Schlauchleitung als Saugschlauch.

Ein Hohlprofil ist ein Profil, das einen Hohlraum einschließt. Mit anderen Worten, ein Hohlprofil ist ein allgemeiner Hohlzylinder, wobei insbesondere der Querschnitt durch die Zylinderwand senkrecht zur Erstreckungsrichtung des Hohlzylinders nicht notwendigerweise kreisförmig ist, sondern grundsätzlich eine beliebige geschlossene Kurve sein kann; wie weiter unten ausgeführt, ist der Querschnitt in einer Ausführungsform der Erfindung oval. Die Zylinderwand des Hohlprofils kann vollständig geschlossen sein oder sie kann an einer oder mehreren Stellen, in Bezug auf die Längserstreckung der Zylinderwand, eine oder mehrere Öffnungen aufweisen, z.B. Entlüftungsbohrungen wie weiter unten beschrieben. An dieser/n besonderen Stelle(n) ist der Querschnitt des Hohlprofils aufgrund der Öffnung(en) nicht geschlossen; weil der Querschnitt des Profils jedoch an den übrigen Stellen eine geschlossene Kurve bildet, ist ein solches Profil dennoch ein Hohlprofil im Sinne der vorliegenden Erfindung. Hingegen ist ein Profil, das einen durchgehenden, in Erstreckungsrichtung verlaufenden Schlitz aufweist, z.B. ein Omega-Profil oder ein Schwalbenschwanzprofil, kein Hohlprofil im Sinne der vorliegenden Erfindung.

Das Hohlprofil kann eine in Längsrichtung des Hohlprofils verlaufende Naht (Längsnaht), an der das Material der Zylinderwand fest zusammengefügt ist, aufweisen. Vorzugsweise ist das Material an einer solchen Naht stoffschlüssig verbunden. Eine Längsnaht kann z.B. erforderlich sein, wenn das Hohlprofil aus einem flachen Material durch Biegen und anschließendes Fügen der Kanten des Materials geschaffen wurde. Das bevorzugte Hohlprofil weist jedoch keine Längsnaht auf. Profile, die in diesem Sinne nahtlos sind, könne z.B. durch Extrusion geschaffen werden, wie weiter unten angesprochen.

Zur Lösung weist das Hohlprofil weiter nur einen linienförmigen Verbindungsbereich mit dem Profilstrang auf, so dass sich bei einer Biegung der Schlauchleitung auch das Hohlprofil relativ zum zugeordneten Profilstrang oder Ringelement mit geringem Kraftaufwand abwinkeln kann.

Es ist im Zusammenhang mit dieser Erfindung unerheblich, ob ein Merkmal auf ein oder mehrere Wellentäler und/oder Hohlprofile gerichtet ist. Bei einem Saugschlauch mit zueinander axial versetzen, ringförmig umlaufenden Wellen liegt eine große Anzahl von Wellentälern vor, während die Anzahl der Wellentäler bei einer gewickelten Schlauchleitung von der Anzahl der Wellen im Profilstrang abhängt. Somit weist ein gewickelter Wellschlauch je nach Ausbildung des Profilstrangs nur ein helixförmiges Wellental oder aber wenige, ineinander schraubenförmig gewundene Wellentäler auf. Die Bezeichnung "Wellentäler" umfasst im Sinne der Erfindung also auch den Spezialfall nur eines "Wellentals".

Es ist ein erreichbarer Vorteil der Erfindung, dass die Barrierewirkung im Wellental verbessert wird, ohne dass die Flexibilität der Schlauchleitung - auch bei größerer Biegung - nennenswert beeinträchtigt wird. Die als elastisch komprimierbares oder elastisch angebundenes Hohlprofil ausgeführte Barriere kann das Wellental weitgehend oder sogar vollständig ausfüllen und damit die Ablagerung von Staub zuverlässig verringern oder verhindern. Bei einer Biegung der Schlauchleitung wird das Hohlprofil ohne besonderen Kraftaufwand mit Bezug auf den Querschnitt des Hohlprofils radial zusammengepresst. Die im Hohlprofil enthaltene Luft kann bei Bedarf beispielsweise durch die offenen Enden des Hohlprofils oder von der Außenseite her eingebrachte Entlüftungsbohrungen entweichen.

### Bevorzugte Ausgestaltung der Erfindung

Vorteilhafte Aus- und Weiterbildungen, welche einzeln oder in Kombination miteinander eingesetzt werden können, sind Gegenstand der abhängigen Ansprüche.

Nach einer ersten bevorzugten Ausbildung besteht die Schlauchleitung aus einem helixförmig gewickelten Profilstrang. Eine derartige Schlauchleitung kann zum Beispiel vorteilhafterweise durch Extrudieren eines endlosen Profilsstrangs aus Kunststoff und nachfolgendes Wickeln besonders ökonomisch gefertigt werden.

Wenn der Profilstrang helixförmig zu einem Schlauch gewickelt wird, wird ein Verbindungsbereich am ersten Rand des Profilstrangs in einem Stoßbereich vorzugsweise mit dem Verbindungsbereich am gegenüberliegenden zweiten Rand des Profilstrangs verbunden. Die Verbindung kann beispielsweise formschlüssig, z.B. durch Verrasten, oder aber stoffschlüssig, z. B. durch Verschweißen oder Verkleben, vorzugsweise mit Heißklebstoff, erfolgen. In einer bevorzugten Ausführung der erfindungsgemäßen Schlauchleitung weist der Profilstrang einen Schenkel und eine Lasche auf, wobei der Schenkel einer Windung sich mit der Lasche einer benachbarten Windung in Anlage befindet und mit dieser fest verbunden ist.

Bei einer alternativen Ausbildung ist angedacht, dass die Schlauchleitung aus aneinandergefügten, vorzugsweise durch Spritzgießen aus Kunststoff geformten Ringelementen besteht. Der nachfolgende Montageaufwand zur Erzeugung der Schlauchleitung wird durch diese Ausbildung zwar vergrößert, dafür können in die Schlauchleitung jedoch lokal auch Ringelemente mit besonderen Ausstattungsmerkmalen eingefügt werden. Beispielsweise können Ringelemente unterschiedlicher Farbe aneinandergefügt werden, um einen besonderen optischen Eindruck zu erzielen. Auch können einzelne Ringelemente mit Drucksensor zum Messen des Unterdrucks im Saugschlauch vorgesehen sein; das Signal des Drucksensors kann zum Beispiel zum Steuern eines Sauggebläses mittelbar oder unmittelbar an die Schlauchleitung angebrachten Sauggebläses herangezogen werden, z.B. bei dem erfindungsgemäßen Staubsauger.

Die Schlauchleitung ist vorzugsweise im Wesentlichen aus einem Kunststoff hergestellt, besonders vorzugsweise aus extrudiertem Kunststoff oder alternativ aus spritzgegossenem Kunststoff. Geeignete Kunststoffe sind beispielsweise Polyolefine, insbesondere Polypropylen (PP) oder PP-Copolymere, oder Polyamide (PA).

Weiterhin ist bevorzugt, dass das Hohlprofil einstückig an den Profilstrang oder die Ringelemente angeformt ist. Hierdurch wird eine besonders rationelle Fertigung der Schlauchleitung ermöglicht. Ferner wird gewährleistet, dass das Hohlprofil nach dem Wickeln oder Zusammenbau in der Schlauchleitung stets an der gewünschten Position angeordnet ist. Das Hohlprofil ist vorzugsweise diesseits des Stoßbereichs von Profilstrang oder Ringelementen angeformt und wird beim Fügen der Schlauchleitung in ein jenseits des Stoßbereichs befindliches Wellental eingebracht. Der Stoßbereich ist der Bereich des Profilstrangs oder eines Ringelements, in dem benachbarte Profilwindungen (bei einem gewickelten Profilstrang) oder Ringe aneinander angrenzen.

Mit Vorteil ist ferner vorgesehen, dass das Hohlprofil zumindest bereichsweise dünnwandiger als die gewellte Wandung der Schlauchleitung ausgebildet ist. Hierdurch kann vorteilhafterweise die Kompressibilität des Hohlprofils ohne Beeinträchtigung des Dichtverhaltens verbessert und der Materialeinsatz verringert werden. Alternativ oder zusätzlich kann das Hohlprofil zumindest bereichsweise aus einem weicheren Werkstoff als die gewellte Wandung der Schlauchleitung gefertigt werden, beispielsweise aus einem Thermoplastischen Polyolefin (TPO).

Falls das Hohlprofil das Wellental nicht vollständig ausfüllt, kann zur weiteren Verbesserung der Abdichtung vorgesehen werden, dass der Profilstrang zumindest eine in gleitende Anlage mit dem Hohlprofil bringbare Zunge aufweist. Durch diese Ausbildung kann vorteilhafterweise die hydraulische oder pneumatische Glätte der Schlauchleitung weiter verbessert und Staubablagerungen entgegen gewirkt werden.

Durch die Erfindung wird im Wellental eine wirksame Barriere zur pneumatischen und/oder hydraulischen Glättung geschaffen, ohne dass die Flexibilität der Schlauchleitung nennenswert beeinträchtigt wird. Das gelingt dadurch, dass bei einer Biegung der Schlauchleitung wird das Hohlprofil ohne besonderen Kraftaufwand radial zusammengepresst wird.

### Kurzbeschreibung der Zeichnungen

Weitere vorteilhafte Ausgestaltungen werden nachfolgend an Hand von sechs in den Zeichnungen dargestellten Ausführungsbeispielen, auf welche die Erfindung jedoch nicht beschränkt ist, näher beschrieben.

Es zeigen schematisch:
- Fig. 1: die Darstellung eines erfindungsgemäß ausgestatteten Bodenstaubsaugers;
- Fig. 2: eine zur Verwendung an dem Staubsauger vorgesehene, gewickelte Schlauchleitung nach einer ersten Ausbildung der Erfindung in seitlicher Ansicht (Fig. 2a), in seitlichem Schnitt (Fig. 2b) und in perspektivischer Ansicht (Fig. 2c);
- Fig. 3: ein Abschnitt des Schlauchs der Figur 2 in gekrümmter Form (Fig. 3a) und ein Ausschnitt aus Fig. 3a (Fig. 3b);
- Fig.4: eine gewickelte Schlauchleitung nach einer anderen Ausbildung in seitlicher Ansicht (Fig. 4a), in seitlichem Schnitt (Fig. 4b) und in perspektivischer Ansicht (Fig. 4c);
- Fig. 5: eine weitere Schlauchleitung in seitlicher Ansicht (Fig. 5a), in seitlichem Schnitt (Fig. 5b) und in perspektivischer Ansicht (Fig. 5c);
- Fig. 6: eine Schlauchleitung nach einer zweiten Ausbildung der Erfindung in seitlicher Ansicht (Fig. 6a), in seitlichem Schnitt (Fig. 6b) und in perspektivischer Ansicht (Fig. 6c);
und schließlich
- Fig. 7: eine weitere Ausbildung einer Schlauchleitung in seitlicher Ansicht (Fig. 7a), in seitlichem Schnitt (Fig. 7b) und in perspektivischer Ansicht (Fig. 7c).

### Ausführliche Beschreibung anhand von zwei Ausführungsbeispielen

Bei der nachfolgenden Beschreibung von zwei bevorzugten Ausführungsformen der vorliegenden Erfindung bezeichnen gleiche Bezugszeichen gleiche oder vergleichbare Komponenten.

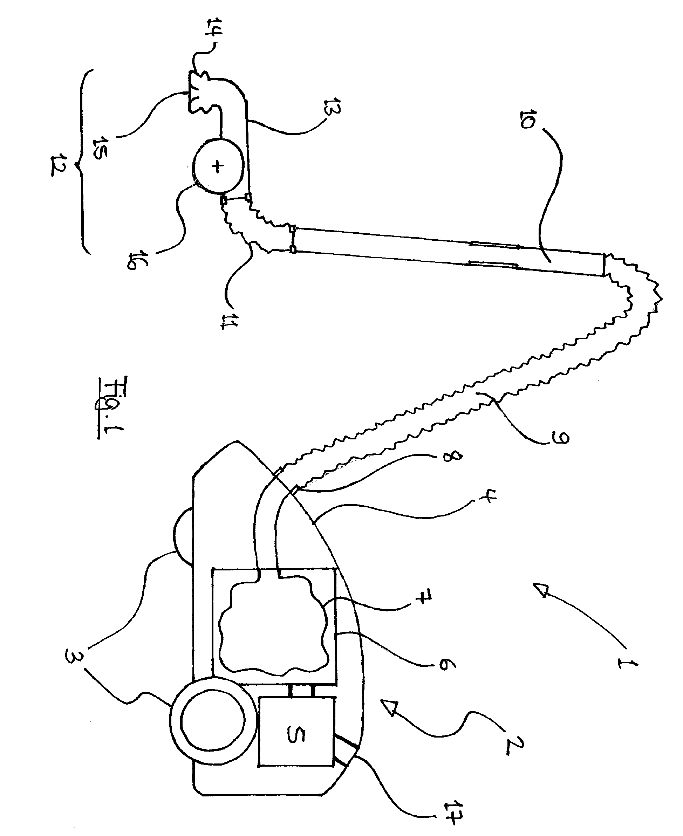

Der in Fig. 1 dargestellte Staubsauger 1 ist als Bodenstaubsauger ausgebildet. Grundsätzlich ist die Erfindung jedoch auch bei anderen Bauformen, beispielsweise einem mit einer flexiblen Saugrohrverlängerung ausgestatteten Stielstaubsauger, mit Vorteil einsetzbar.

Der Staubsauger 1 nach Fig. 1 besteht aus einem gesonderten Aggregateträger 2, welcher mit einem Fahrwerk 3 ausgestattet ist und damit komfortabel über die zu reinigende Bodenfläche bewegt werden kann. Das Gehäuse 4 des Aggregateträgers 2 nimmt insbesondere ein Sauggebläse 5 und eine Staubabscheideeinrichtung 6 in Form eines Staubfilterbeutels 7 auf. Weitere, nicht gezeigt Komponenten des Aggregateträgers sind beispielsweise ein aufwickelbares Stromkabel zur elektrischen Verbindung mit einem Stromnetz, Stelleinrichtungen zum Einschalten und zur Leistungseinstellung, elektronische Regelungseinrichtungen und ein Staufach für Zubehör wie Saugbürsten oder dergleichen.

Stromauf der Staubabscheideeinrichtung 6 ist ein Anschluss 8 zum Anbringen eines biegsamen Saugschlauches 9 vorgesehen, welcher seinerseits mit einem telekopierbaren Schubrohr 10 strömungsverbunden ist. Das Schubrohr 10 ist gedichtet in einen Anschlussstutzen 11 der Saugdüse 12 eingeschoben. Stromauf des gelenkig mit der übrigen Saugdüse 12 verbundenen Anschlussstutzens 11 weist die Saugdüse 12 ferner ein Saugdüsengehäuse 13 und eine über die zu reinigende Bodenfläche zu führende Gleitsohle 14 mit einem Saugmund 15 auf. Die Saugdüse 12 ist ferner mit einer Rollenanordnung 16 zur Abstützung des Schubrohrs 10 versehen.

Beim Reinigungsvorgang liegt die Gleitsohle 14 dichtend an der Bodenfläche an, wobei durch den am Saugmund 15 anliegenden Unterdruck ein Luftstrom angesaugt wird und den auf der Bodenfläche befindlichen Staub mitführt. Der Schmutz führende Luftstrom wird durch das Schubrohr 10 und den Saugschlauch 9 in die Staubabscheideeinrichtung 6 geleitet, wo der Staub im Staubfilterbeutel 7 abgeschieden wird. Der nunmehr gereinigte Luftstrom durchquert das Sauggebläse 5 und wird anschließend durch eine Öffnung 17 im Gehäuse 4 des Aggregateträgers 2 in die Umgebung abgeführt.

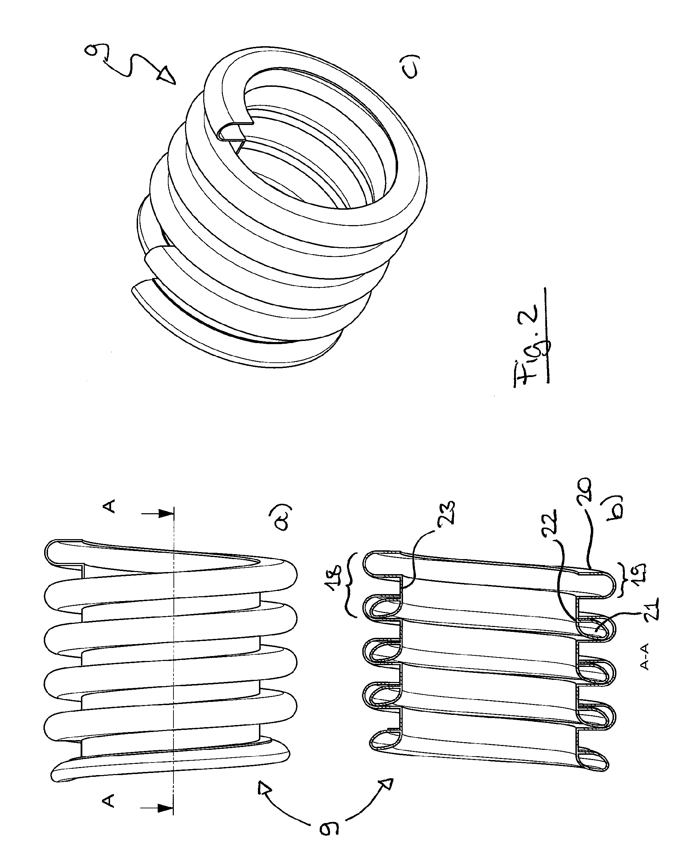

Der in Fig. 2 abgebildete Saugschlauch 9 ist aus einem aus Kunststoff extrudierten Profilstrang 18 helixförmig gewickelt, wobei der Profilstrang 18 im zur Verbindung vorgesehenen Stoßbereich durch Kleben mit Heißklebstoff dichtend verbunden ist. Der Profilstrang 18 weist an einem Rand einen U-förmig verlaufenden Bereich 19 mit einem endseitigen Schenkel 20 auf, der senkrecht zur Haupterstreckungsrichtung des Profilstangs 18 verläuft. Am gegenüberliegenden Rand ist ein dünnwandiges, elastisch komprimierbares Hohlprofil 21 einstückig an den Profilstrang 18 angeformt, welches mit diesem über genau einen linienförmigen Verbindungsbereich 22 verbunden ist. Das Hohlprofil 21 ist weist einen näherungsweise ovalen Querschnitt auf, wobei der größere Durchmesser ebenfalls senkrecht zur Haupterstreckungsrichtung des Profilstangs 18 verläuft. Der Bereich 19 und das Hohlprofil 21 sind miteinander durch eine in Haupterstreckungsrichtung des Profilstangs 18 ausgerichtete, geradlinig verlaufende Übergangszone 23 verbunden. Weil es durch Extrusion gebildet worden ist, weist das Hohlprofil 21 keine Naht auf.

Bei der Fertigung des Saugschlauchs 9 wird der Profilsstrang 18 schraubenförmig aufgewickelt, wobei der Schenkel 20 in Anlage an das Hohlprofil 21 gelangt und mit diesem durch Stoffschluss unlösbar und gasdicht verbunden wird. Der U-förmige Bereich 19 des Profilsstrangs 18 bildet nachfolgend das Wellental 24 des gewellten Saugschlauchs 9 aus, welches vom als Barriere dienenden Hohlprofil 21 weitgehend ausgefüllt wird. Durch diese Maßnahme wird der Saugschlauch innen pneumatisch glatt, wodurch sich der Strömungswiderstand und damit der Druckverlust beim Staubsaugen verringern. Ferner wird der durch Ablagerung von Staub und anderen Verschmutzungen bedrohte Raum im Saugschlauch 9 erheblich verringert. Bei einer Biegung des Saugschlauchs 9 verformt sich zunächst der U-förmige Bereich 19 und damit das Wellental 24, welches auf der Innenseite der Krümmung gestaucht wird. Dabei wird das Hohlprofil 21 ohne besonderen Kraftaufwand elastisch komprimiert, so dass die Barrierewirkung aufrecht erhalten, die Flexibilität des Saugschlauchs 9 aber nicht nennenswert beeinträchtigt wird.

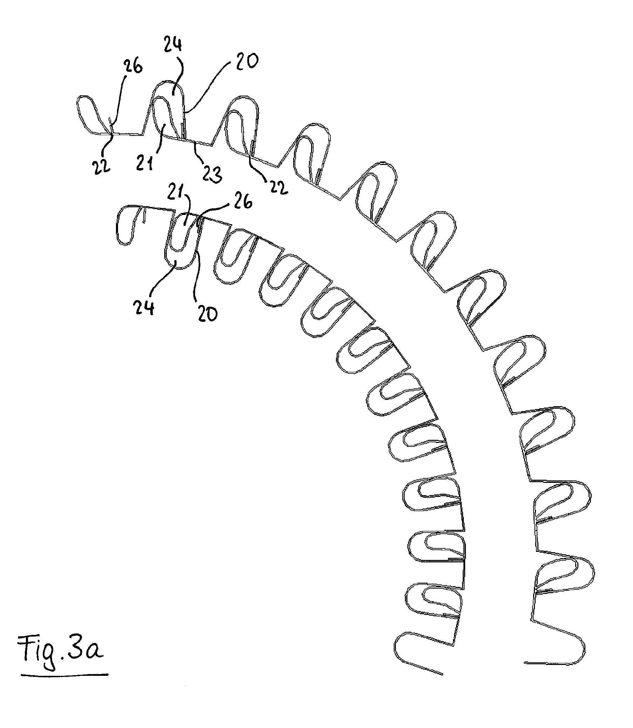

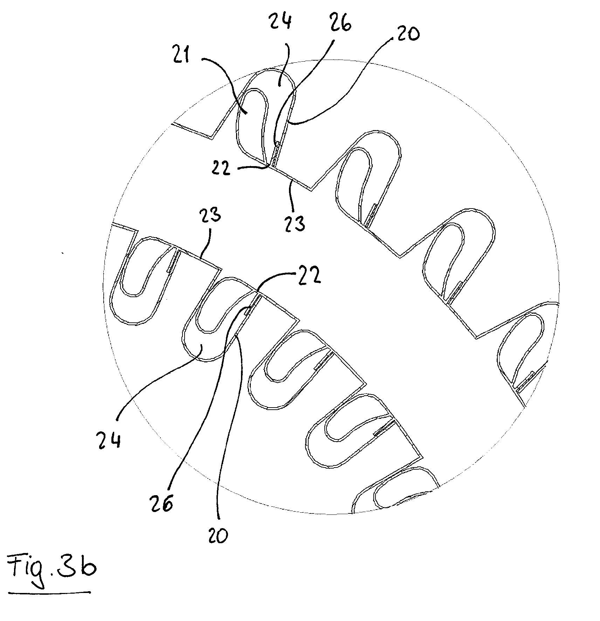

Fig. 3a zeigt einen Saugschlauch 9 mit einem ähnlichen Querschnitt, wobei jetzt aber noch eine Lasche 26 vorgesehen ist, die sich mit dem Schenkel 20 einer benachbarten Windung in Anlage befindet und mit dieser mittels Heißkleber stoffschlüssig fest verbunden ist. Letzteres ist in Fig. 3b, die einen vergrößerten Ausschnitt der Fig. 3a darstellt, besonders gut erkennbar. Der Saugschlauch 9 in Figuren 3a und 3b ist gekrümmt, sodass er auf seiner Außenseite gestreckt ist, indem die Wellentäler 24 dort erweitert sind, während er auf der Innenseite durch Verengen der Wellentäler 24 gestaucht ist. Sowohl in den erweiterten als auch den verengten Wellentälern 24 liegt das Hohlprofil 21 an einer Wandung des Wellentals 24 gleitend an, sodass es das Wellental 24 von der Seite, an der es an das Wellentals 24 angebunden ist, bis zu der Seite, an der es gleitend anliegt überspannt. Dies ist dadurch möglich, dass die das Hohlprofil selbst eine gewisse Elastizität ausweist und außerdem im Verbindungsbereich 22 elastisch angebunden ist.

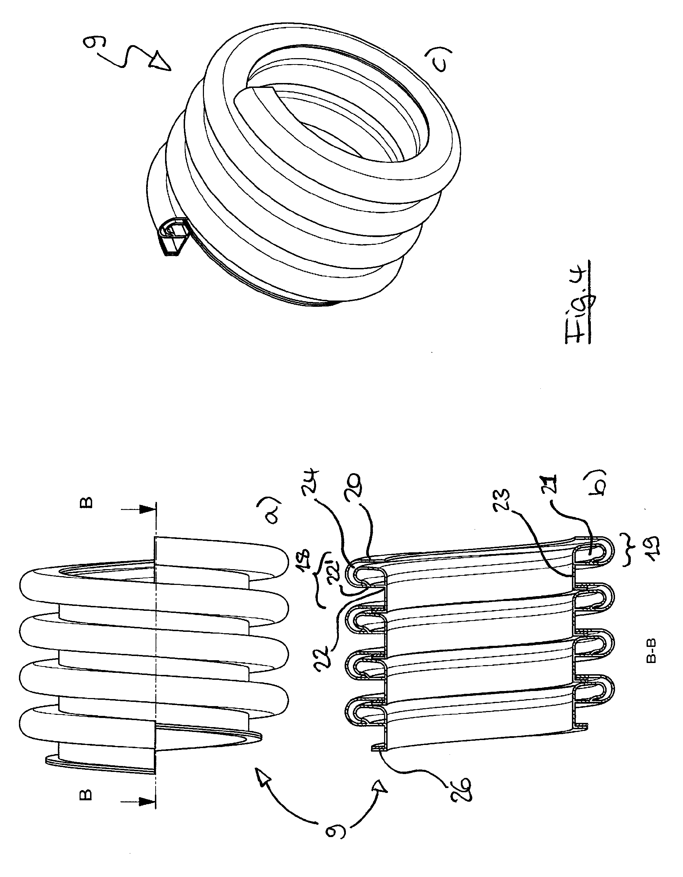

Bei dem erneut durch Wickeln eines Profilsstrangs 18 gefertigten Saugschlauch 9 nach Fig. 4 ist das Hohlprofil 21 bereits in den U-förmigen Bereich 19 und damit in das spätere Wellental 24 eingelassen. Das Hohlprofil 21 ist dabei durch zwei linienförmige Verbindungsbereiche 22, 22' mit dem Profilstrang 18 verbunden. Das Hohlprofil 21 geht dabei im Verbindungsbereich 22 geradlinig in die Übergangszone 23 über, während der Verbindungsbereich 22' als schräge Ausmündung auf dem Schenkel 20 gegenüberliegenden Teil des Bereichs 19 ausgebildet ist. Durch diese Ausführung wird das als Barriere dienende Hohlprofil 21 hinsichtlich seiner Position im Wellental 24 besonders gut festgelegt. An das andere Ende der Übergangszone 23 ist rechtwinklig nach außen abragend eine Lasche 26 einstückig angeformt, die beim Wickeln des Profilstrangs 18 in Anlage mit dem Schenkel 20 gebracht und mit diesem durch Stoffschluss unlösbar und gasdicht verbunden wird.

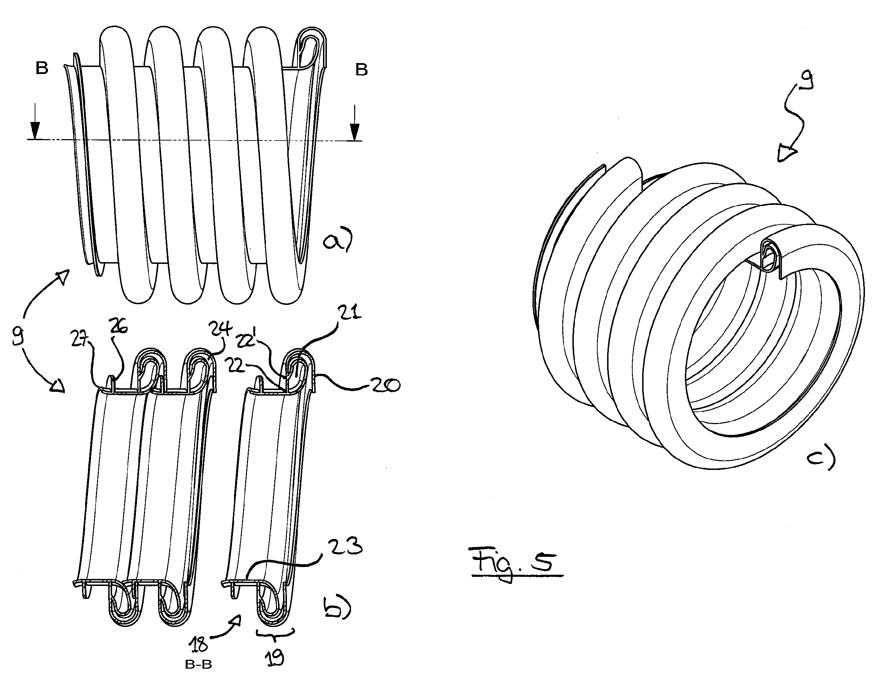

Die Ausbildung nach Fig. 5 ist dahingehend weiterentwickelt, dass in Verlängerung der Übergangszone 23 am Profilstrang eine Zunge 27 vorgesehen ist, welche beim Wickeln des Saugschlauchs 9 in gleitende Anlage an die dem Strömungskanal im Saugschlauch 9 zugewandte Wandung des Hohlprofils 21 gebracht wird. Die Zunge 27 verbessert die Barrierewirkung zum Wellental 24 nochmals, vermindert die Biegeflexibilität des Saugschlauchs 9 durch die Relativbewegung zwischen Zunge 27 und Hohlprofil 21 bei Stauchung des krümmungsinneren Wellentals 24 jedoch kaum. Darüber hinaus kann die Zunge 27 die Barrierewirkung auch dann besonders wirksam aufrecht erhalten, wenn das krümmungsäußere Wellental gestreckt werden sollte.

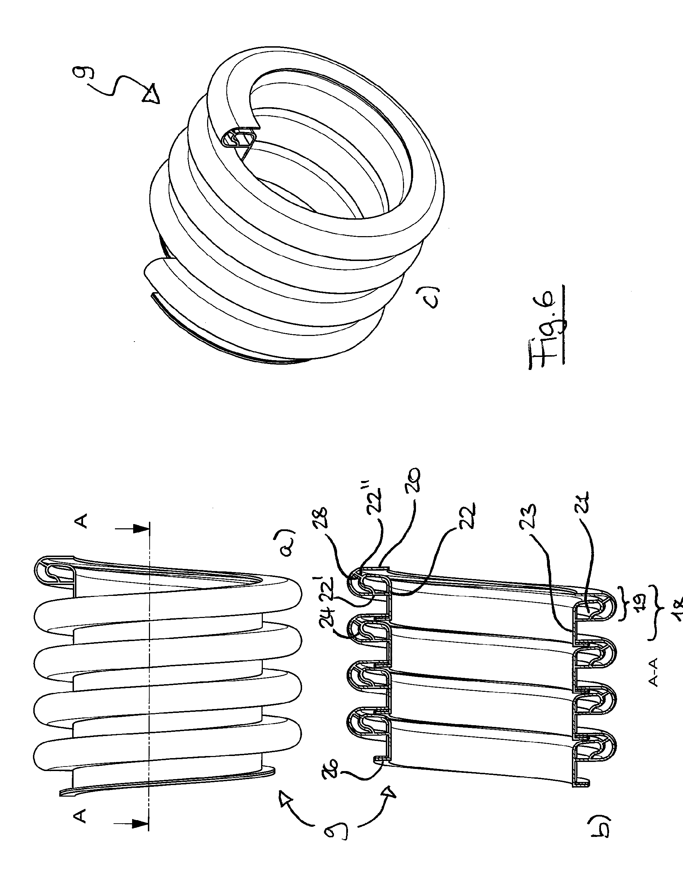

Der in Fig. 6 dargestellte Saugschlauch 9 entspricht im Wesentlichen der Ausführung nach Fig. 4. Das Hohlprofil 21 ist jedoch in einem dritten linienförmigen Verbindungsbereich 22" durch einen ersten Steg 28 nochmals mit dem Bereich 19 des Profilstrangs 18 verbunden, welcher oberhalb des Schenkels 20 in den Bereich 19 einmündet und mit diesem und Teilen der Wandung des Hohlprofils 21 ein zweites, gleichfalls elastisch komprimierbares Hohlprofil 21' im Wellental 24 ausbildet. Bei einer Stauchung des Wellentals 24 werden somit beide Hohlprofile 21, 21' verformt.

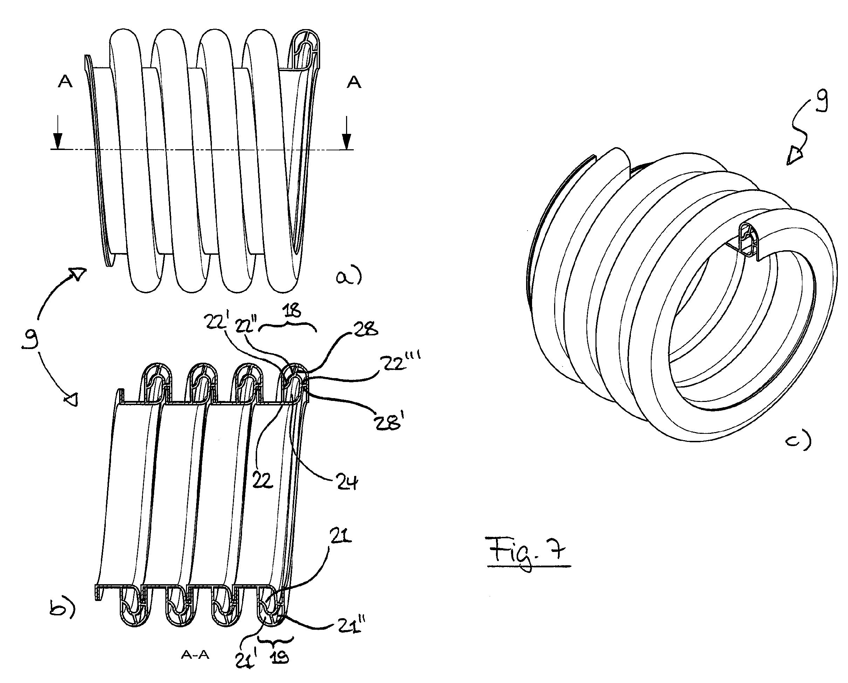

Bei der Ausbildung nach Fig. 7 ist noch ein weiterer, vom Schenkel 20 zum ersten Hohlprofil 21 verlaufender Steg 28' vorgesehen, welcher mit dem Bereich 19, dem Steg 28 und einem Teil der Wandung des ersten Hohlprofils 21 ein drittes Hohlprofil 21" im Wellental 24 schafft, wodurch das erste Hohlprofil 21 sogar einen vierten linienförmigen Verbindungsbereich 22"' ausweist.

Bei dem erfindungsgemäßen Saugschlauch 9 wird die Barrierewirkung im Wellental 24 verbessert, ohne dass die Flexibilität des Saugschlauchs 9 darunter leidet. Die als elastisch komprimierbares Hohlprofil 21, 21', 21" ausgeführte Barriere kann das Wellental 24 vielmehr weitgehend oder sogar vollständig ausfüllen und damit die Ablagerung von Staub verringern oder verhindern. Bei einer Biegung des Saugschlauchs 9 wird das Hohlprofil 21, 21', 21" ohne besonderen Kraftaufwand radial zusammengepresst.

Mit der Erfindung kann die Barrierewirkung im Wellental 24 verbessert werden, ohne dass die Flexibilität der Schlauchleitung 9 nennenswert beeinträchtigt wird. Insbesondere kann die Ablagerung von Staub verringert oder sogar verhindert werden. Die in der vorstehenden Beschreibung, den Ansprüchen und den Zeichnungen offenbarten Merkmale können sowohl einzeln als auch in beliebiger Kombination für die Verwirklichung der Erfindung in ihren verschiedenen Ausgestaltungen von Bedeutung sein.

### Bezugszeichenliste

- 1: Staubsauger
- 2: Aggregateträger
- 3: Fahrwerk
- 4: Gehäuse
- 5: Sauggebläse
- 6: Staubabscheideeinrichtung
- 7: Staubfilterbeutel
- 8: Anschluss
- 9: Saugschlauch
- 10: Schubrohr
- 11: Anschlussstutzen
- 12: Saugdüse
- 13: Saugdüsengehäuse
- 14: Gleitsohle
- 15: Saugmund
- 16: Rollenanordnung
- 17: Öffnung
- 18: Profilstrang
- 19: Bereich (des Profilstrangs)
- 20: Schenkel
- 21, 21', 21": Hohlprofil
- 22 bis 22"': Verbindungsbereich
- 23: Übergangszone
- 24: Wellental
- 26: Lasche
- 27: Zunge
- 28,28': Steg

## Patentansprüche

1. Schlauchleitung mit einer in Längsrichtung gewellten, innere Wellentäler (24) aufweisenden Wandung, insbesondere zur Verwendung als Saugschlauch (9) an einem Staubsauger (1), wobei im Bereich der inneren Wellentäler (24) zur pneumatischen und/oder hydraulischen Glättung der Schlauchleitung eine Barriere vorgesehen ist,
und
die Barriere mindestens ein elastisch komprimierbares und/oder elastisch an den Rest der Schlauchleitung angebundenes Hohlprofil (21, 21', 21") aufweist, **dadurch gekennzeichnet, dass** das Hohlprofil (21) nur einen linienförmigen Verbindungsbereich (22) mit einem Profilstrang (18) aufweist.

2. Schlauchleitung nach Anspruch 1, **dadurch gekennzeichnet, dass** die Schlauchleitung aus einem helixförmig gewickelten Profilstrang (18) besteht.

3. Schlauchleitung nach Anspruch 2, **dadurch gekennzeichnet, dass** das Hohlprofil (21, 21', 21") einstückig an den Profilstrang (18) angeformt ist.

4. Schlauchleitung nach Anspruch 2 oder 3, **dadurch gekennzeichnet, dass** der Profilstrang (18) einen Schenkel (20) und eine Lasche (26) aufweist, wobei der Schenkel (20) einer Windung sich mit der Lasche (26) einer benachbarten Windung in Anlage befindet und mit dieser fest verbunden ist.

5. Schlauchleitung nach einem der vorhergehenden Ansprüche, **dadurch gekennzeichnet, dass** das Hohlprofil (21, 21', 21") zumindest bereichsweise dünnwandiger als die gewellte Wandung der Schlauchleitung ausgebildet ist.

6. Schlauchleitung nach einem der vorhergehenden Ansprüche, **dadurch gekennzeichnet, dass** das Hohlprofil (21, 21', 21") zumindest bereichsweise aus einem weicheren Werkstoff als die gewellte Wandung der Schlauchleitung ausgebildet ist.

7. Schlauchleitung nach einem der vorhergehenden Ansprüche, **dadurch gekennzeichnet, dass** der Profilstrang (18) zumindest eine in gleitende Anlage mit dem Hohlprofil (21, 21', 21") bringbare Zunge (27) aufweist.

8. Staubsauger (1) mit einer als Saugschlauch (9) dienenden Schlauchleitung nach einem der vorhergehenden Ansprüche.

## Claims

1. Hose line with a wall having internal wave troughs (24) undulating in the longitudinal direction, in particular for use as a vacuum hose (9) on a vacuum cleaner (1), wherein in the region of the internal wave troughs (24) a barrier is provided for pneumatic and/or hydraulic smoothing of the hose line,
and
the barrier has at least one hollow profile (21, 21', 21") which is elastically compressible and/or elastically connected to the rest of the hose line, **characterised in that** the hollow profile (21) only has one linear connecting region (22) with a profile strand (18).

2. Hose line according to claim 1, **characterised in that** the hose line consists of a helically wound profile strand (18).

3. Hose line according to claim 2, **characterised in that** the hollow profile (21, 21', 21") is moulded to the profile strand (18) in one piece.

4. Hose line according to claim 2 or 3, **characterised in that** the profile strand (18) has a limb (20) and a tab (26), wherein the limb (20) of a winding is in contact with the tab (26) of a neighbouring winding and is permanently connected to the same.

5. Hose line according to one of the preceding claims, **characterised in that** the hollow profile (21, 21', 21"), at least in regions, has thinner walls than the undulating wall of the hose line.

6. Hose line according to one of the preceding claims, **characterised in that** the hollow profile (21, 21', 21 "), at least in regions, is embodied as made of a softer material than the undulating wall of the hose line.

7. Hose line according to one of the preceding claims, **characterised in that** the profile strand (18) has at least one tongue (27) which can be brought into sliding contact with the hollow profile (21, 21', 21").

8. Vacuum cleaner (1) having a hose line serving as vacuum hose (9) according to one of the preceding claims.

## Revendications

1. Tuyau flexible comprenant une paroi présentant des creux d'ondulation intérieurs (24), ondulés dans le sens longitudinal, notamment pour utilisation en tant que tuyau d'aspiration (9) sur un aspirateur (1), une barrière étant ménagée dans la zone des creux d'ondulation intérieurs (24) pour le lissage pneumatique et/ou hydraulique du tuyau flexible,
et
la barrière présentant au moins un profilé creux (21, 21', 21") élastiquement comprimable et/ou relié de manière élastique au reste du tuyau flexible, **caractérisé en ce que** le profilé creux (21') présente seulement une zone de liaison (22) en forme de ligne comprenant un cordon profilé (18).

2. Tuyau flexible selon la revendication 1, **caractérisé en ce que** le tuyau flexible est constitué d'un cordon profilé (18) enroulé en forme hélicoïdale.

3. Tuyau flexible selon la revendication 2, **caractérisé en ce que** le profilé creux (21, 21', 21") est formé d'une seule pièce sur le cordon profilé (18).

4. Tuyau flexible selon la revendication 2 ou 3, **caractérisé en ce que** le cordon profilé (18) présente un côté (20) et une patte (26), le côté (20) d'une spire étant adjacent à la patte (26) d'une spire voisine et étant relié de manière fixe à celle-ci.

5. Tuyau flexible selon l'une quelconque des revendications précédentes, **caractérisé en ce que** le profilé creux (21, 21', 21") est réalisé, tout du moins en partie, à paroi plus mince que la spire ondulée du tuyau flexible.

6. Tuyau flexible selon l'une quelconque des revendications précédentes, **caractérisé en ce que** le profilé creux (21, 21', 21") est réalisé, tout du moins en partie, dans un matériau plus mou que la paroi ondulée du tuyau flexible.

7. Tuyau flexible selon l'une quelconque des revendications précédentes, **caractérisé en ce que** le cordon profilé (18) présente au moins une languette (27) pouvant être mise en appui coulissant avec le profilé creux (21, 21', 21").

8. Aspirateur (1) comprenant un tuyau flexible servant de tuyau d'aspiration (9), selon l'une quelconque des revendications précédentes.
